(19) **Europäisches Patentamt**
**European Patent Office**
**Office européen des brevets**

(11) **EP 0 654 676 B1**

(12) **EUROPÄISCHE PATENTSCHRIFT**

(45) Veröffentlichungstag und Bekanntmachung des Hinweises auf die Patenterteilung:
**12.05.1999 Patentblatt 1999/19**

(51) Int Cl.$^6$: **G01S 3/801**, G01S 7/52

(21) Anmeldenummer: **93118845.2**

(22) Anmeldetag: **24.11.1993**

(54) **Verfahren zum Bestimmen von Grundfrequenzen im Frequenzspektrum einer akustischen Ortungsanlage**

Method for determining the fundamental frequencies of the frequency spectrum of an acoustic locating device

Procédé pour déterminer la fréquence fondamentale du spectre de fréquence d'un appareil de localisation acoustique

(84) Benannte Vertragsstaaten:
**DE FR GB NL**

(72) Erfinder:
- **Kummert, Anton, Dr,.Ing.**
  **D-27339 Riede (DE)**
- **Wetjen, Andreas, Dipl.-Math.**
  **D-27299 Langwedel (DE)**

(43) Veröffentlichungstag der Anmeldung:
**24.05.1995 Patentblatt 1995/21**

(73) Patentinhaber: **STN ATLAS Elektronik GmbH**
**28305 Bremen (DE)**

(56) Entgegenhaltungen:
**EP-A- 0 241 737**          **DE-A- 4 142 906**
**DE-A- 4 220 429**          **GB-A- 2 114 744**

**Beschreibung**

Die Erfindung betrifft ein Verfahren zum Bestimmen einer oder mehrerer Grundfrequenzen und/oder ihrer Harmonischen im Frequenzspektrum eines Empfangssignals einer akustischen Ortungsanlage der im Oberbegriff des Anspruchs 1 genannten Art.

Mit akustischen Ortungsanlagen werden Fahrzeuge aufgrund ihres Betriebs- und/oder Fahrgeräuschs detektiert und geortet. Vom Fahrzeug abgestrahlte Schallwellen werden von der Ortungsanlage empfangen und ihre Empfangssignale ausgewertet. Die Einfallsrichtung der Schallwellen liefert die Peilung zum Fahrzeug. Um eine Klassifizierung und/oder Identifizierung des Fahrzeugs vorzunehmen, werden die Empfangssignale in ein komplexes Frequenzspektrum umgewandelt, das nach einer Störbefreiung und ggf. Betragsbildung bezüglich Frequenzlinien und zugehörige Frequenzen analysiert wird.

Wasserfahrzeuge, wie Schiffe, U-Boote, Torpedos, oder Luftfahrzeuge, wie Flugzeuge und Hubschrauber, oder Landfahrzeuge, wie Radfahrzeuge und Kettenfahrzeuge, strahlen ein Betriebs- und/oder Fahrgeräusch ab, dessen Frequenzspektrum ausgeprägte Frequenzlinien aufweisen. Aufgrund der Drehzahl des Propellers, der Zündfolge des Motors oder des Aufschlagens von Kettengliedern findet man im Frequenzspektrum eine oder mehrere ausgeprägte Grundfrequenzen und dazu harmonische Frequenzen. Solche Frequenzspektren für propellerbetriebene Wasserfahrzeuge sind in dem Artikel "Classification and Identification (CAI), by Submarine Sonars", L. Kühnle, Naval Forces, No. VI/1987, gezeigt und ihre Auswertung im niederfrequenten Bereich - LOFAR - und im hochfrequenten Bereich nach Demodulation eines Teilbandes - DEMON - beschrieben. Für propellerbetriebene Luftfahrzeuge sind entsprechende Frequenzspektren der DE-OS 35 10 469 zu entnehmen. Frequenzspektren, die von Rad- und Kettenfahrzeugen verursacht werden, sind in der DE-OS 32 04 874 dargestellt.

In der DE-PS 31 48 735 wird ein Verfahren zur Untersuchung von Frequenzspektren beschrieben, bei dem Frequenzlinien mit dem größten Amplitudenwert und ihre zugehörigen Frequenzen ausgewertet werden. Differenzen der Frequenzen zweier aufeinanderfolgender Frequenzlinien werden ermittelt und sämtliche Differenzen miteinander verglichen. Gleiche Differenzen liegen dann vor, wenn die Frequenzen der Frequenzlinien Vielfache oder Harmonische einer gemeinsamen Grundfrequenz sind. Gibt es mehrere Grundfrequenzen im Frequenzspektrum, so werden mehrere untereinander gleiche Differenzen detektiert. Um unabhängig von der Zahl der Grundfrequenzen und ihrer Harmonischen zu sein, wird in der DE-PS 31 48 735 ein Verfahren vorgeschlagen, bei dem aus dem Frequenzspektrum des Signals ein zweites Spektrum ermittelt wird, dessen Spektralwerten Logarithmen der Signalfrequenzen zugeordnet werden. Dieses Spektrum wird mit einem harmonischen Referenzspektrum verglichen, dessen Spektralwerten Logarithmen von Referenzfrequenzen zugeordnet sind. Während des Vergleichs werden die Spektren gegeneinander verschoben. Die Häufigkeit der Übereinstimmung wird festgestellt. Die Verschiebung, bei der das Häufigkeitsmaximum auftritt, gibt die Grundfrequenz an.

Es ist Aufgabe der vorliegenden Erfindung ein Verfahren der im Oberbegriff des Anspruchs 1 genannten Art zu schaffen, bei dem ohne Referenzspektrum allein durch Auswerten der Frequenzen der Frequenzlinien im Frequenzspektrum des Empfangssignals und ihrer Differenzen eine oder mehrere Grundfrequenzen bestimmt werden und über die gewonnenen Grundfrequenzen eine Aussage über die Qualität der Bestimmung getroffen wird. Diese Aufgabe wird erfindungsgemäß durch die im Kennzeichenteil des Anspruchs 1 genannten Merkmale gelöst.

Aus drei Frequenzlinien mit den größten Amplitudenwerten wird eine mögliche Grundfrequenz ermittelt. Erfindungsgemäß wird durch Anwendung der Fuzzy-Logik, wie sie in dem Buch "Fuzzy-Logik, Grundlagen, Anwendungen, Hard- und Software", Thomas Tilli, Franzis Verlag GmbH, München, 1991, beschrieben wird, und ausgehend von dieser möglichen Grundfrequenz das gesamte Frequenzspektrum ausgewertet. Die mögliche Grundfrequenz wird als linguistische Variable aufgefaßt und ihre Lage beim gesamten Frequenzbereich beschrieben. Dazu wird der Frequenzbereich in einzelne Bereiche aufgeteilt, die die sprachliche Einordnung der Grundfrequenz gestatten. Sie wird z.B. als "niedrig", "mittel", "hoch", "sehr hoch" usw. bezeichnet. Für jeden Bereich wird eine Zugehörigkeitsfunktion gewählt, mit der die Grundfrequenz nach einer Zuordnung zu einem der Bereiche bewertet wird. Die Stärke ihrer Zugehörigkeit wird durch die Zugehörigkeitsfunktion festgelegt. Die Zugehörigkeitsfunktion überdeckt einen Wertebereich von Null bis Eins und kann in diesem Wertebereich beliebige Werte annehmen, die die Stärke der Zugehörigkeit des Meßwertes zu einer bestimmten Menge beschreibt. So wird der linguistischen Variablen, z. B. "hoch" der Zugehörigkeitswert h=0,7 beigefügt. Diesen Vorgang nennt man Fuzzifikation.

Linguistische Variable ersetzen also gemessene Werte durch Wörter und Ausdrücke der Umgangssprache. Es wird ein interessierender Bereich für die gemessenen Werte definiert und die linguistische Variable beschreibt den Wert mit natürlich-sprachlichen Ausdrücken. Zugehörigkeitsfunktionen ermöglichen eine Bewertung innerhalb des Bereichs. Alternativ oder zusätzlich zur Grundfrequenz werden Amplitudenwerte der Frequenzlinien, Abweichungen der Frequenzen der Frequenzlinien von der Grundfrequenz oder Abweichungen der Frequenz der Frequenzlinien von Harmonischen der Grundfrequenz als linguistische Variable einer Fuzzifikation unterworfen. Eine oder mehrere dieser linguistischen Variablen sind Eingangsgrößen für eine Fuzzy-Regelbasis, in der durch "unscharfes Schließen" über vorgebbare Regeln eine Glaubwürdigkeit ermittelt wird, mit der eine der Frequenzen der Frequenzlinien die Grundfrequenz oder eine damit harmonische Frequenz ist. Die Glaubwürdigkeit ist wieder eine linguistische Variable mit vorgebbaren Bereichen und Zugehörigkeitsfunktionen.

Die Regeln sind eine Aufstellung aller möglichen Kombinationen der in Bereiche eingeteilten Eingangsgrößen. Für jede Kombination wird eine Aussage über ihre Glaubwürdigkeit getroffen. In das Abfassen der Regeln fließt das Know-how ein, das ein Experte bei der Analyse von Frequenzspektren erworben hat. Beim Abarbeiten der Regeln wird das Produkt der Zugehörigkeitswerte der Eingangsvariablen am Eingang der Fuzzy-Regelbasis gebildet, das den Zugehörigkeitswert der durch die Regel bestimmten Glaubwürdigkeit am Ausgang der Fuzzy-Regelbasis angibt. Die Eigenschaften der Eingangsgrößen ermöglichen eine Aussage über das Frequenzspektrum bezüglich seiner Grundfrequenz und Harmonischer aufgrund des Wissens, das ein menschlicher Auswerter erworben hat.

Bei einer Anwendung des erfindungsgemäßen Verfahrens nach Anspruch 1 im Zusammenhang mit einer Ortungsanlage für propellerbetriebene Wasserfahrzeuge wird Grundfrequenz und relative Abweichung der Frequenz der Frequenzlinie von einer Harmonischen dieser Grundfrequenz einer Fuzzifikation unterworfen und es werden Regeln aufgestellt, die eine Aussage darüber machen, welche Kombinationen der Eingangsgröße eine bestimmte Aussage über die Glaubwürdigkeit der Bestimmung der Grundfrequenz treffen. Eine solche Regel lautet beispielsweise: Wenn die Grundfrequenz dem Bereich "mittel" zugeordnet ist und wenn die Abweichung dem Bereich "sehr klein" zugeordnet ist, dann ist die Frequenz der untersuchten Frequenzlinie mit einer Glaubwürdigkeit im Bereich "sehr hoch" harmonisch mit der Grundfrequenz des Frequenzspektrums. Dieselbe Glaubwürdigkeit gilt dann auch für die Grundfrequenz selbst. Die Stärke der Zugehörigkeit der Glaubwürdigkeit zum Bereich "sehr hoch" wird durch Multiplikation der Zugehörigkeitswerte der Grundfrequenz zum Bereich "mittel" und der Abweichung zum Bereich "sehr klein" gewonnen.

Der besondere Vorteil des erfindungsgemäßen Verfahrens nach Anspruch 1 besteht darin, daß die aus dem Frequenzspektrum ermittelten Werte - z. B. die Grundfrequenz oder - gemäß dem Anspruch 2 - die relative Abweichung der Frequenzen der Frequenzlinie von einer mit der Grundfrequenz harmonischen Frequenz oder Amplitudenwerte von Frequenzlinien - durch die Fuzzifikation sprachlich formulierbaren Regeln zugänglich sind und eine Umsetzung des Expertenwissens erleichtern.

Anhand der ermittelten Glaubwürdigkeiten können unbrauchbare Frequenzspektren für die Detektion und Klassifikation ausgeschieden werden, z. B. wenn das Empfangssignal ein schlechtes Nutz- zu Störverhältnis aufweist. Die Vorgehensweise ist die gleiche wie bei einem menschlichen Auswerter, der nur solche Frequenzspektren zur Auswertung aussucht, die für eine Analyse brauchbar erscheinen. Der besondere Vorteil des erfindungsgemäßen Verfahrens nach Anspruch 1 besteht nun darin, daß die Erfahrung eines menschlichen Auswerters, seine Intuition und Daumenregeln, durch die Regeln in der Fuzzy-Regelbasis implementiert werden und somit die qualitative Natur des menschlichen Denkens beim Treffen von Entscheidungen durch die Fuzzy-Logik nachvollzogen wird.

Bei der vorteilhaften Weiterbildung des erfindungsgemäßen Verfahrens nach Anspruch 3 und 4 wird die Grundfrequenz zur Umwandlung in eine linguistische Variable in drei Bereiche aufgeteilt, wobei die Zugehörigkeitsfunktionen benachbarter Bereiche einander überlappen. Die als mögliche Grundfrequenz ausgewählte Frequenz wird als "niedrig", "mittel" oder "hoch" eingestuft. In den Übergangsbereichen wird die Grundfrequenz jeweils zwei Bereichen mit entsprechendem Wert der Zugehörigkeitsfunktion zugeteilt. Wenn nicht nur die Grundfrequenz als Eingangsvariable des Fuzzy-Regelkreises benutzt wird, sondern auch die Amplitudenwerte der Frequenzlinien, dann werden die einzelnen Amplitudenwerte mit dem bei der gleichen Frequenz auftretenden Rauschpegel normiert, wie es beispielsweise in der DE-OS 30 35 757 beschrieben ist. Auch hier werden zum Bilden der linguistischen Variablen drei Bereiche für die Amplitudenwerte definiert, wobei der Bereich "niedrig" für solche Amplitudenwerte benannt wird, die kaum über dem Rauschpegel liegen. Der Bereich "hoch" erfaßt Frequenzlinien, die signifikante Spektrallinien des Frequenzspektrums darstellen. Der Vorteil der Benennung der Amplitudenwerte als linguistische Variable besteht darin, daß Frequenzspektren, die keine signifikanten Frequenzlinien aufweisen, von vornherein durch die in der Fuzzy-Regelbasis vorgegebenen Regeln für eine Grundfrequenzbestimmung ausscheiden.

Bei der Auswahl der Zugehörigkeitsfunktionen in den einzelnen Bereichen hat es sich als besonders vorteilhaft erwiesen, für den Bereich "niedrig" einen dreiecförmigen Verlauf von Eins auf Null zu wählen, wobei der Grundfrequenz Null der Wert der Zugehörigkeitsfunktion von "1" zugeordnet wird und dem Amplitudenwert Null ebenfalls der Wert der Zugehörigkeitsfunktion von "1". Für den Bereich "mittel" ist die Zugehörigkeitsfunktion trapezförmig, für den Bereich "hoch" halbtrapezförmig. So ist der Spielraum für eine entsprechende Fuzzifikation der Eingangsvariablen der jeweiligen Aufgabenstellung anpaßbar.

Bei der Auswertung von Frequenzspektren eines propellerbetriebenen Fahrzeugs ist es vorteilhaft, entsprechend der Weiterbildung des erfindungsgemäßen Verfahrens nach Anspruch 5 die Grundfrequenz dadurch gezielt zu bestimmen, daß die Frequenzen der Frequenzlinien oder ihre Differenzen durch ganze Teilerzahlen geteilt werden, die möglichen Blattzahlen von Propellern entsprechen.

Ausgehend von diesen möglichen Grundfrequenzen wird nach der vorteilhaften Weiterbildung des erfindungsgemäßen Verfahrens nach Anspruch 6 das Frequenzspektrum ausgewertet, indem die Frequenz jeder Frequenzlinie, deren Amplitudenwert oberhalb einer vorgebbaren Schwelle liegt, durch die Grundfrequenzen geteilt und der dadurch gewonnene Quotient auf eine ganze Zahl auf- oder abgerundet wird. Anschließend werden sämtliche Frequenzen und Differenzen von Frequenzen durch diese ganzen Zahlen geteilt und liefern eine zweite Anzahl von möglichen Grundfrequenzen. Nach der vorteilhaften Weiterbildung des erfindungsgemäßen Verfahrens nach Anspruch 7 wird der Median dieser nach der Größe sortierten Grundfrequenzen bestimmt und für die weitere Auswertung des Frequenzspektrums der Fuzzifikation unterworfen und bildet eine der Eingagsvariablen der Fuzzy-Regelbasis. Der Median ist die mittlere der nach der Größe sortierten Grundfrequenzen.

Anschließend wird eine relative Abweichung der Frequenz der Frequenzlinien von Harmonischen der so gewonnenen Grundfrequenz gebildet und als Eingangsvariable der Fuzzifikation unterworfen. Gemäß der vorteilhaften Weiterbildung des erfindungsgemäßen Verfahrens nach Anspruch 8 wird die Grundfrequenz mit ganzen Zahlen multipliziert, beispielsweise wieder mit möglichen Blattzahlen von Propellern, und die Differenz zwischen den so gebildeten Harmonischen und der Frequenz jeder Frequenzlinie gebildet und durch die Grundfrequenz geteilt. Dieser Quotient kennzeichnet die relative Abweichung, die erfindungsgemäß der Fuzzifikation unterworfen wird und als linguistische Variable mit Zugehörigkeitsfuktionen bewertet wird. Besonders vorteilhaft ist eine Einteilung in drei Bereiche "niedrig", "mittel" und "hoch" für kleine, mittlere und hohe relative Abweichungen, deren Zugehörigkeitsfunktionen einander überlappen. Anspruch 9 gibt eine vorteilhafte Einteilung der Bereiche an. Der Verlauf der sich überlappenden Zugehörigkeitsfunktionen ist trapezförmig. Im Bereich "niedrig" ist er nahezu dreiecksförmig.

Nach der vorteilhaften Weiterbildung des erfindungsgemäßen Verfahrens nach Anspruch 10 werden linguistische Variable, nämlich die Grundfrequenz, die relative Abweichung und ggf. zusätzlich der Amplitudenwert der Frequenzlinie in der Fuzzy-Regelbasis nach vorgebbaren Regeln durch "unscharfes Schließen" miteinander verknüpft. Es wird untersucht, inwieweit die aus dem Frequenzspektrum abgeleitete Grundfrequenz und die relative Abweichung der Frequenz jeder Frequenzlinie von Harmonischen dieser Grundfrequenz mit den Bedingungen der Regel übereinstimmen. Jede Regel gibt eine Glaubwürdigkeit an, mit der das Frequenzspektrum harmonisch ist und die Grundfrequenz aufweist. Die Glaubwürdigkeit ist wiederum eine linguistische Variable, die beispielsweise in fünf Bereiche "sehr niedrig", "niedrig", "mittel", "hoch" und "sehr hoch" mit jeweils dreieckiger Zugehörigkeitsfunktion aufgeteilt ist. Die Regeln geben den Bereich für die Glaubwürdigkeit an. Das Produkt der Zugehörigkeitsfunktionswerte der Eingangsvariablen liefert den Grad oder die Stärke der Glaubwürdigkeit in dem durch die Regel bestimmten Bereich.

Der Vorteil des erfindungsgemäßen Verfahrens nach Anspruch 10 besteht darin, daß durch die Ermittlung der Glaubwürdigkeit eine Bewertung des Ergebnisses möglich ist. Bei hoher Glaubwürdigkeit ist die geprüfte Frequenz der Frequenzlinie eine Grundfrequenz oder eine Harmonische dieser Grundfrequenz im untersuchten Frequenzspektrum. Eine niedrige Glaubwürdigkeit zeigt, daß entweder das Frequenzspektrum gar nicht harmonisch ist und somit keine Grundfrequenz feststellbar ist oder daß dieses Frequenzspektrum für eine Auswertung ungeeignet erscheint, da das Nutz-/Störverhältnis sehr schlecht ist.

Bei der vorteilhaften Weiterbildung des erfindungsgemäßen Verfahrens nach Anspruch 11 wird nicht geprüft, ob die Frequenz der Frequenzlinie eine geringe Abweichung von einer Harmonischen der gewählten Grundfrequenz aufweist, sondern es werden die Frequenzen der Frequenzlinien der Größe nach sortiert und Differenzfrequenzen zwischen benachbarten Frequenzen gebildet. Zur kleinsten Frequenz wird außerdem die Differenz zur Frequenz "Null" gebildet. Sind die Differenzfrequenzen untereinander gleich, so geben sie die Grundfrequenz an. Diese Differenzfrequenzen und daraus ausgewählte oder vorgegebene Grundfrequenzen werden voneinander abgezogen und durch die Grundfrequenz geteilt. Der Quotient gibt eine relative Grundfrequenzabweichung an. Diese relative Grundfrequenzabweichung wird wieder als linguistische Variable aufgefaßt und mit Zugehörigkeitsfunktionen bewertet.

Nach der vorteilhaften Weiterbildung des erfindungsgemäßen Verfahrens nach Anspruch 12 wird die Zugehörigkeitsfunktion für die Grundfrequenzabweichung so gewählt, daß aus ihren Werten unmittelbar in einer vereinfachten Fuzzy-Regelbasis eine Glaubwürdigkeit für die Grundfrequenz abgeleitet werden kann, ohne daß andere Kenngrößen des Frequenzspektrums hinzugezogen werden müssen. Für relative Grundfrequenzabweichungen von 0 bis 0,03 ist der Wert der Zugehörigkeitsfunktion gleich 1. Für relative Grundfrequenzabweichungen größer als 0,05 ist der Wert gleich 0. Im Bereich von 0,03 bis 0,05 weist die Zugehörigkeitsfunktion einen stark abfallenden Verlauf von 1 auf 0 auf, entsprechend der im Anspruch 11 angegebenen Funktion. Bestimmt man jetzt für jede Grundfrequenz den Wert der Zugehörigkeitsfunktion für die relative Grundfrequenzabweichung und bildet den Mittelwert sämtlicher so bestimmten Werte und bezieht ihn auf den maximal ermittelten Wert der Zugehörigkeitsfunktion, so ergibt dieser Quotient gemäß Anspruch 14 eine Grundfrequenzglaubwürdigkeit. Der Vorteil der Weiterbildungen des erfindungsgemäßen Verfahrens nach den Ansprüchen 11 bis 14 besteht insbesondere darin, daß allein aus der relativen Grundfrequenzabweichung eine Beurteilung des Frequenzspektrums bezüglich des Auftretens einer Grundfrequenz möglich ist, ohne daß weitere Kenngrößen des Frequenzspektrums, wie z.B. die Grundfrequenz selbst oder Amplitudenwerte, in der vereinfachten Fuzzy-Regelbasis hinzugezogen werden müssen. Eine Vorgabe von Regeln und das Abarbeiten der Regeln sowie eine Defuzzifikation vereinfacht sich zu einer Auswertung der Stärke der Zugehörigkeit der Grundfrequenzabweichung, um die Grundfrequenzglaubwürdigkeit zu ermitteln.

Bei der vorteilhaften Weiterbildung des erfindungsgemäßen Verfahrens nach Anspruch 15 wird die Grundfrequenz mit der größten Grundfrequenzglaubwürdigkeit jedoch als Eingangsgröße für die Fuzzy-Regelbasis verwen-

EP 0 654 676 B1

det und entsprechend den dort vorgegebenen Regeln mit den linguistischen Variablen für die Amplitudenwerte und die relative Abweichung der Frequenz der Frequenzlinie von einer harmoischen Frequenz, die aus der mit einer ganzen Zahl multiplizierten Grundfrequenz gebildet wird, verarbeitet. Diese Grundfrequenz mit der größten Grundfrequenzglaubwürdigkeit wird ebenfalls als linguistische Variable aufgefaßt und den gemäß dem erfindungsgemäßen Verfahren nach Anspruch 2 angegebenen drei Bereichen zugeordnet und mit den jeweiligen Zugehörigkeitsfunktionen bewertet. Der Vorteil besteht darin, daß die Qualität der Bestimmung der Grundfrequenz bereits bekannt ist und nunmehr überprüft wird, ob Frequenzen der Frequenzlinien mit dieser Grundfrequenz harmonisch sind, wobei die Grundfrequenz aus den Differenzen der Frequenzen benachbarter Frequenzlinien gewonnen wurde. Damit wird ausgeschlossen, daß solche Frequenzen als Grundfrequenz betrachtet werden, die ein Bruchteil der wahren Grundfrequenz sind.

In der Fuzzy-Regelbasis wird das Produkt der Werte der Zugehörigkeitsfunktionen für die Eingangsvariablen gebildet. Das Produkt liefert einen Zahlenwert, der seinerseits die Stärke angibt, mit der ein mit der Regel zugeordneter Bereich für die Glaubwürdigkeit erreicht ist. Die Regel lautet beispielsweise: Wenn die relative Abweichung "gering" mit l=0,8, und die Grundfrequenz "mittel" mit m=1, dann ist die Glaubwürdigkeit "sehr hoch" mit vh=0,8·1=0,8. Das Frequenzspektrum weist mit einem sehr hohen Glaubwürdigkeitsgrad vh=0,8 die eingegebene Grundfreqenz als Grundfrequenz auf. Der Glaubwürdigkeitsgrad vh=1 wäre der größte, mit der die Glaubwürdigkeit "sehr hoch" erreicht werden kann.

Dieser Glaubwürdigkeitsgrad oder diese Stärke für die Glaubwürdigkeit wird nach dem erfindungsgemäßen Verfahren nach Anspruch 16 mit einem Plausibilitätsgrad multipliziert, mit dem die Regel plausibel scheint, nämlich daß die Frequenz der zu untersuchenden Frequenzlinie eine Grundfrequenz oder eine Harmonische einer Grundfrequenz ist. Der Plausibilitätsgrad weist Werte zwischen 0 und 1 auf und gestattet wiederum eine Bewertung der Regel. Die Aufstellung der Regeln und des Plausibilitätsgrads sind aus Erfahrungen entwickelt worden, die ein Auswerter im Laufe vieler Jahre erworben hat. Regeln und Plausibilitätsgrad spiegeln sein Expertenwissen wieder. Durch die Bewertung mit dem Plausibilitätsgrad erhält man wieder eine Möglichkeit, den Grad der Abweichung von der Regel bei der Schlußfolgerung bezüglich der Glaubwürdigkeit noch zu modifizieren. Diese Form des "unscharfen Schließens" nennt man auch "approximatives Schließen".

Auf die Eingangsvariablen werden in der Fuzzy-Regelbasis alle alle Regeln angewendet. Jede Regel liefert als Ergebnis eine linguistische Variable für die Glaubwürdigkeit, die nach der vorteilhaften Weiterbildung des erfindungsgemäßen Verfahrens nach Anspruch 15 in einen von zum Beispiel fünf Glaubwürdigkeitsbereichen von "sehr niedrig" bis "sehr hoch" mit dreieckiger Zugehörigkeitsfunktion fällt. Die Glaubwürdigkeitsbereiche umfassen ein Intervall für Glaubwürdigkeitszahlenwerte. Durch die Unschärfe der Eingangsvariablen weisen die Spitzenwerte der dreieckigen Zugehörigkeitsfunktion in dem mit jeder Regel ermittelten Glaubwürdigkeitsbereich unterschiedliche Höhen zwischen "0" und "1" auf. Für jede Stelle des Intevalls wird der maximale Wert aller mit den Regeln ermittelten Zugehörigkeitsfunktionswerten ausgewählt. Sie bilden einen Funktionsverlauf, dessen Flächenschwerpunkt bestimmt wird. Der Flächenschwerpunkt liegt in einem der fünf Glaubwürdigkeitsbereiche und kennzeichnet den zu der Grundfrequenz gehörenden Glaubwürdigkeitszahlenwert.

Der Vorteil des erfindungsgemäßen Verfahrens nach Anspruch 17 besteht darin, daß bei einer Auswertung vieler Frequenzspektren über einen längeren Zeitraum die ermittelten Glaubwürdigkeitszahlenwerte einen guten Überblick über die Qualität der Frequenzspektren und die Messungen der Grundfrequenz geben. Statt der linguistischen Variablen werden Glaubwürdigkeitszahlenwerte angegeben. Der Vorteil besteht darin, daß diese Glaubwürdigkeitszahlenwerte in einem Diagramm über der Zeit aufgetragen werden können und zeitliche Schwankungen bezüglich der Qualität der Messungen deutlich erkennen lassen. Gleichbleibend hohe Glaubwürdigkeitszahlenwerte zeigen, daß die ermittelte Grundfrequenz z.B. die Drehzahl des das Fahrzeug antreibenden Propellers angibt, die beispielsweise bei Hubschraubern sehr konstant ist.

Diese Art der Signalverarbeitung mit Hilfe der Fuzzy-Logik ist unmittelbar übertragbar auf die Bestimmung der Blattzahl des antreibenden Propellers. Der Zusammenhang zwischen Frequenzen von Frequenzlinien und Blattzahlen ist aus dem o.g. Artikel "Classification and Identification by Submarine Sonars" zu entnehmen.

Mit der vorteilhaften Weiterbildung des erfindungsgemäßen Verfahrens nach Anspruch 18 wird ein Strukturmaß zwischen 0 und 1 ermittelt, das Aufschluß darüber gibt, ob das untersuchte Frequenzspektrum Frequenzlinien aufweist. Das Strukturmaß ist um so größer je signifikanter sich Frequenzlinien vom Störhintergrund abheben. Frequenzspektren mit geringem Strukturmaß werden für eine weitere Auswertung nicht in Betracht gezogen.

Um auch solche Messungen ausscheiden zu können, die zwar an Frequenzspektren mit hohem Strukturmaß vorgenommen wurden, jedoch nicht harmonisch sind, wird nach einer vorteilhaften Weiterbildung des erfindungsgemäßen Verfahrens nach Anspruch 19 zusätzlich die Grundfrequenzglaubwürdigkeit als Zahlenwert und der Glaubwürdigkeitszahlenwert ausgewertet. Der kleinste der ermittelten Werte liefert eine Aussagesicherheit über die Bestimmung der Grundfrequenz und das Auftreten von Harmonischen der Grundfrequenz.

Besonders vorteilhaft ist es, das erfindungsgemäße Verfahren zur Detektion und Klassifizierung von Luft- und Wasserfahrzeugen mit Propellerantrieb zu verwenden, wobei nach der vorteilhaften Weiterbildung gemäß Anspruch 20 entweder eine Frequenzanalyse im Frequenzbereich der Grundfrequenzen, die als sog. LOFAR-Analyse bekannt ist, oder gemäß Anspruch 21 im hochfrequenten Bereich durchzuführen, die als DEMON-Analyse bekannt ist. Bei der Verwendung gemäß Anspruch 18 wird ausgenutzt, daß die Ausbreitungsreichweite von Schallwellen tiefer Frequenzen wesentlich größer als im hochfrequenten Bereich ist. Bei einer Verwendung gemäß Anspruch 21 weist das Empfangssignal ein besseres Nutz-/Störverhältnis auf, da Empfangsantennen im hochfrequenten Bereich besser bündeln.

Frequenzspektren von Hubschraubergeräuschen enthalten zwei Grundfrequenzen, die durch die Drehung des Hauptrotors und des Heckrotors verursacht werden, wie in der DE-OS 41 42 906 angegeben ist. Die Grundfrequenzen liegen in unterschiedlichen Frequenzbereichen und gestatten eine Identifizierung des Hubschraubers. Diese Eigenschaft wird bei dem erfindungsgemäßen Verfahren nach Anspruch 22 vorteilhaft ausgenutzt.

Da bei propellerbetriebenen Fahrzeugen üblicherweise auftretende Blattzahlen der Propeller bekannt sind, ist es gemäß der vorteilhaften Weiterbildung des erfindungsgemäßen Verfahrens nach Anspruch 23 besonders vorteilhaft, sämtliche Frequenzen und Differenzen von Frequenzen zuallererst durch mögliche Blattzahlen zu teilen, um einen Ansatz für eine Grundfrequenz zu finden. Dadurch ist die Anzahl der vorab durchzuführenden Rechenoperationen reduzierbar.

Das erfindungsgemäße Verfahren ist nicht nur bei propellerbetriebenen Fahrzeugen vorteilhaft anwendbar, sondern auch zur Detektion und Klassifizierung von Landfahrzeugen gemäß der Weiterbildung des erfindungsgemäßen Verfahrens nach Anspruch 24 anwendbar, wobei dann zur Grundfrequenzbestimmung die Teilerzahlen vorteilhaft durch die Anzahl der Zylinder oder Ventile vorgegeben werden.

Bei einem Einsatz des erfindungsgemäßen Verfahrens nach Anspruch 25 zum Unterscheiden und Klassifizieren von Radfahrzeugen und Kettenfahrzeugen, wie es in der DE-OS 32 04 874 angegeben ist, ist es besonders vorteilhaft, die Zündfolgefrequenz und Kettengliedfrequenz als linguistische Variable aufzufassen und außerdem eine Unterscheidung über ihre in dem Frequenzspektrum unterschiedlich hohen typischen Amplitudenwerte vorzunehmen, die dann ebenfalls als linguistische Variable in dem Fuzzy-Regelblock mit entsprechenden Regeln bearbeitet werden.

Die Erfindung ist anhand von in der Zeichnung dargestellten Ausführungsbeispielen für ein Verfahren zum Bestimmen einer oder mehrerer Grundfrequenzen im Frequenzspektrum eines Empfangssignals einer akustischen Ortungsanlage näher beschrieben. Es zeigen:

Fig. 1                     Blockschaltbild für eine Ortungsanlage in der Wasserschalltechnik und Auswerteanordnung zum Bestimmen von Grundfrequenzen und Glaubwürdigkeiten,

Fig. 2                     Frequenzspektren eines Empfangssignals über der Zeit,

Fig. 3 bis Fig. 8          Zugehörigkeitsfunktionen für Grundfrequenzen, relative Abweichungen, Amplitudenwerte und Glaubwürdigkeiten,

Fig. 9                     aus den Frequenzspektren gemäß Fig. 2 ermittelte Glaubwürdigkeitszahlenwerte für die Drehzahl eines Propellers über der Zeit,

Fig. 10                    ein Detailblockschaltbild zum Bilden einer Grundfrequenzglaubwürdigkeit,

Fig. 11                    Rechnerschaltung zum Bestimmen einer zweiten Anzahl von Grundfrequenzen,

Fig. 12 und Fig. 13        Rechenschaltungen zum Bestimmen einer Aussagesicherheit.

Wasserfahrzeuge strahlen Betriebsgeräusche und/oder Fahrgeräusche ab, die durch Betriebsaggregate und antreibende Propeller verursacht werden. Mit einer akustischen Ortungsanlage 10 werden Schallwellen dieser Geräusche von einer Empfangsbasis 11 empfangen. Ihre Empfangssignale werden unmittelbar oder zusammengefaßt zu einem Richtcharakteristiksignal ausgewertet, um Peilung und Klassifizierung des Wasserfahrzeugs zu erhalten. Der Empfangsbasis 11 ist eine FFT-Vorrichtung 12 zur Fourier-Transformation nachgeordnet. Zur Störbefreiung des am Ausgang der FFT-Vorrichtung 12 befindlichen komplexen Frequenzspektrums wird in einer Normierungsschaltung 13 das Betragsspektrum gebildet und Amplitudenwerte von Frequenzlinien auf einen bei der gleichen Frequenz auftretenden Rauschpegel normiert, wie es beispielsweise in der DE-OS 30 35 757 angegeben ist. Der Ortungsanlage 10 ist eine Auswerteanordnung 20 nachgeordnet, in der Grundfrequenzen und Harmonische im Frequenzspektrum mit Hilfe der Fuzzy-Logik bestimmt werden.

In einer Auswahlschaltung 21 werden die Frequenzlinien mit den drei größten Amplitudenwerten ausgewählt und einer Rechenschaltung 22 zum Ermitteln einer Grundfrequenz zugeführt. Die Rechenschaltung 22 besteht aus einer Teilerschaltung, in der die Frequenzen an ihrem Eingang durch Teilerzahlen geteilt werden, die entsprechend möglichen Blattzahlen von Propellern vorgegeben werden. Am Ausgang der Rechenschaltung 22 werden die so gewonnenen Grundfrequenzen GFj ausgegeben.

In der Auswahlschaltung 21 wird außerdem eine Zahl von Frequenzlinien aus dem Frequenzspektrum ausgewählt, die über einem vorgebbaren Pegel liegen. Frequenzen dieser Frequenzlinien werden nacheinander über eine Sortierschaltung 23 an eine Rechenstufe 24 zum Bestimmen einer relativen Abweichung "diff" gegeben, die mit den Grundfrequenzen GFj am Ausgang der Rechenschaltung 22 beaufschlagt ist.

In einer Fuzzifikationsstufe 25 werden die Grundfrequenzen GFj am Ausgang der Rechenschaltung 22 und die relativen Abweichungen "diff" am Ausgang der Rechenstufe 24 mit Zugehörigkeitsfunktionen μ1, μ2 bewertet. Der Fuzzifikationsstufe 25 ist eine Fuzzy-Regelbasis 30 nachgeordnet, an deren Ausgang eine Glaubwürdigkeit gw angezeigt wird, mit der eine Frequenz Fi eine harmonische Frequenz zu der Grundfrequenz GFj des Frequenzspektrums ist.

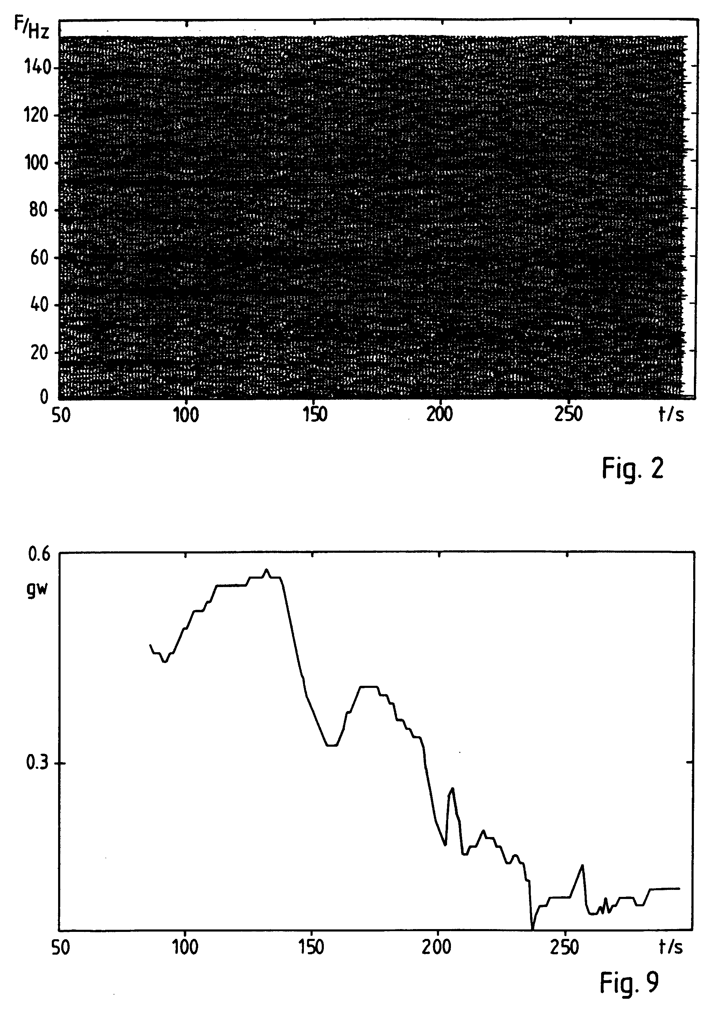

Fig. 2 zeigt in einer Wasserfalldarstellung das Betragsspektrum am Ausgang der Ortungsanlage 10 über der Frequenz F/Hz und Zeit t/s. Amplitudenwerte der Frequenzlinien sind als Intensitätsschrieb dargestellt, je höher der Amplitudenwert desto intensiver die Schwärzung. Man kann dieser Wasserfalldarstellung entnehmen, daß das Frequenzspektrum harmonisch ist und Frequenzlinien bei Frequenzen aufweist, die Vielfache oder Harmonische einer Grundfrequenz sind. Bei der Auswertung eines dieser Frequenzspektren stehen am Ausgang der Auswahlschaltung 21 die Frequenzlinien mit den drei größten Amplitudenwerten und den Frequenzen 15, 45 und 92 Hz an. Diese drei Frequenzen werden durch ganze Teilerzahlen 2, 3, 4, 5 geteilt und liefern am Ausgang der Rechenschaltung 22 die Grundfrequenzen GFj (3 Hz, 5 Hz, ..., 15 Hz, ..., 46 Hz). Am Eingang der Sortierschaltung 23 stehen sieben Frequenzlinien bei den Frequenzen Fi = 15 Hz, 30 Hz, 45 Hz, 60 Hz, 92 Hz, 121 Hz und 135 Hz an. Ihre Amplitudenwerte liegen über einer vorgegebenen Schwelle.

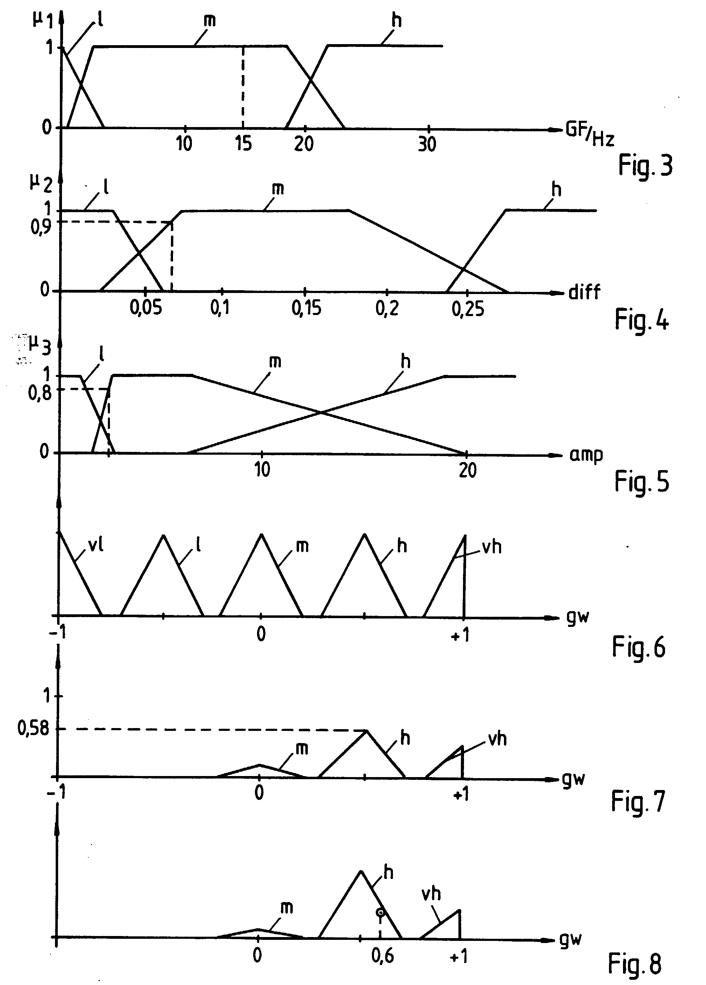

Mit der Ortungsanlage 10 werden propellergetriebene Schiffe geortet und klassifiziert. Die Frequenzspektren von Empfangssignalen weisen in einem Frequenzbereich bis ca. 30 Hz ihre Grundfrequenzen auf. Dieser Frequenzbereich wird in drei Bereiche aufgeteilt und mit den linguistischen Variablen "low", "middle", "high" belegt. Es werden Grundfrequenzen von 0 bis 3 Hz als "low", von 1 bis 20 Hz als "middle" und größer als 20 Hz als "high" bezeichnet. Fig. 3 zeigt die Zugehörigkeitsfunktion für die linguistische Variable der Grundfrequenz GF. In den Übergangsbereichen überschneiden sich die Zugehörigkeitsfunktionen. Die Grundfrequenzen werden mit einem dreiecksförmigen Verlauf mit abfallender Flanke von 1 auf 0 im Bereich "low" bewertet, im Bereich "middle" und "high" mit einem trapezförmigen Verlauf. Die Grundfrequenz GF = 15 Hz liegt also im Berech "middle" mit einer Stärke m = 1. Die Umwandlung der Grundfrequenz GF in die linguistische Variable und die Angabe der Stärke ihrer Zugehörigkeit nennt man Fuzzifikation. Die Fuzzifikation der Grundfrequenz GF wird in der Fuzzifikationsstufe 25 vorgenommen. Die linguistische Variable und die Stärke der Zugehörigkeit bilden die Eingangsvariable der Grundfrequenz für die Fuzzy-Regelbasis 30.

In der Rechenstufe 24 zum Bestimmen der relativen Abweichung diff wird die Differenz zwischen der Frequenz Fi der Frequenzlinie und einer zur Grundfrequenz GFj harmonischen Frequenz bestimmt. Die Grundfrequenz GFj wird mit einer ganzen Zahl q multipliziert. Die Differenz wird durch die Grundfrequenz GFj geteilt

$$diff = \left| \frac{Fi - q \cdot GFj}{GFj} \right|$$

Die so gewonnene relative Abweichung "diff" wird als linguistische Variable aufgefaßt und in der Fuzzifikationsstufe 25 bewertet.

Fig. 4 zeigt die Zugehörigkeitsfunktion μ2 für die relative Abweichung diff, die in drei Bereiche "low", "middle" und "high" eingeteilt ist. In den Übergangsbereichen sind sich schneidende, abfallende und ansteigende Flanken vorgesehen. Die Zugehörigkeitsfunktion μ2 für den Bereich "low" ist dreiecksförmig, für den Bereich "middle" und "high" jeweils trapezförmig.

Amplitudenwerte amp der Frequenzlinien am zweiten Ausgang der Sortierschaltung 23 werden ebenfalls als linguistische Variable in drei Bereiche "low", "middle" und "high" eingeteilt und mit einer Zugehörigkeitsfunktion μ3 gemäß Fig. 5 in der Fuzzifikationsstufe 25 bewertet.

Die drei linguistischen Variablen und ihre Zugehörigkeitswerte μ1, 2, 3 werden in der Fuzzy-Regelbasis 30 miteinander verknüpft. Die Regeln in der Fuzzy-Regelbasis 30 werden aus dem Expertenwissen abgeleitet, das bei der Auswertung solcher Frequenzspektren erworben wurde. Wenn beispielsweise die relative Abweichung "diff" "low" und der Amplitudenwert amp "high" und die Grundfrequenz GF "middle" ist, dann ist bei einem Empfangssignal, das von einem Schiff empfangen wurde, die Glaubwürdigkeit "very high", daß die Frequenz Fi die Grundfrequenz GF oder eine Harmonische der Grundfrequenz im Frequenzspektrum ist. Die nachfolgende Tabelle gibt Regeln an, mit denen die linguistischen Variablen am Eingang der Fuzzy-Regelbasis 30 verknüpft werden und zu einer Glaubwürdigkeit GW führen.

| | Regel | Plausibilitätsgrad |
|---|---|---|
| 1. | if diff=L and amp=L and GH=L then GW=VL | 1 |
| 2. | if diff=L and amp=L and GF=H then GW=VL | 1 |

(fortgesetzt)

| | Regel | Plausibilitätsgrad |
|---|---|---|
| 3. | if diff=L and amp=L and GF=M then GW=VH | 0,45 |
| 4. | if diff=L and amp=M and GF=L then GW= L | 0,94 |
| 5. | if diff=L and amp=M and GF=H then GW= L | 1 |
| 6. | if diff=L and amp=M and GF=M then GW=VH | 1 |
| 7. | if diff=L and amp=H and GF=L then GW= L | 1 |
| 8. | if diff=L and amp=H and GF=H then GW= L | 1 |
| 9. | if diff=L and amp=H and GF=M then GW=VH | 1 |
| 10. | if diff=M and amp=L and GF=L then GW=VL | 1 |
| 11. | if diff=M and amp=L and GF=H then GW=VL | 1 |
| 12. | if diff=M and amp=L and GF=M then GW= M | 0,41 |
| 13. | if diff=M and amp=L and GF=M then GW= H | 0,46 |
| 14. | if diff=M and amp=L and GF=M then GW=VH | 0,18 |
| 15. | if diff=M and amp=M and GF=L then GW=VL | 0,24 |
| 16. | if diff=M and amp=M and GF=H then GW=VL | 0,59 |
| 17. | if diff=M and amp=M and GF=H then GW= L | 0,32 |
| 18. | if diff=M and amp=M and GF=M then GW= M | 0,20 |
| 19. | if diff=M and amp=M and GF=M then GW= H | 0,81 |
| 20. | if diff=M and amp=M and GF=M then GW=VH | 0,5 |
| 21. | if diff=M and amp=H and GF=L then GW= L | 0,47 |
| 22. | if diff=M and amp=H and GF=H then GW= L | 1 |
| 23. | if diff=M and amp=H and GF=M then GW= M | 0,05 |
| 24. | if diff=M and amp=H and GF=M then GW= H | 1 |
| 25. | if diff=M and amp=H and GF=M then GW=VH | 0,87 |
| 26. | if diff=H and amp=L and GF=L then GW=VL | 1 |
| 27. | if diff=H and amp=L and GF=H then GW=VL | 1 |
| 28. | if diff=H and amp=L and GF=M then GW= M | 1 |
| 29. | if diff=H and amp=M and GF=L then GW=VL | 1 |
| 30. | if diff=H and amp=M and GF=H then GW=VL | 1 |
| 31. | if diff=H and amp=M and GF=M then GW= M | 1 |
| 32. | if diff=H and amp=H and GF=L then GW=VL | 1 |
| 33. | if diff=H and amp=H and GF=H then GW=VL | 1 |
| 34. | if diff=H and amp=H and GF=M then GW= L | 0,49 |
| 35. | if diff=H and amp=H and GF=M then GW= M | 1 |

Die linguistische Variable für die Glaubwürdigkeit GW ist in fünf Bereiche vl, l, m, h, vh aufgeteilt und reicht von "very low" bis "very high". Der Verlauf der Zugehörigkeitsfunktion ist in Fig. 6 gezeigt und jeweils dreiecksförmig. Den linguistischen Variablen für die Glaubwürdigkeit ist ein Intervall von -1 bis +1 an Glaubwürdigkeitszahlenwerten zugeordnet.

Es werden in der Fuzzy-Regelbasis 30 sämtliche Regeln abgearbeitet. Die Stärken der Zugehörigkeit der linguistischen Variablen zu einem Bereich werden mit einem Produktoperator verknüpft. Das Produktergebnis gibt die Stärke an, mit der die Glaubwürdigkeit einem der fünf Bereiche zuzuordnen ist. Jede Regel wird mit einem Plausibilitätswert für die Glaubwürdigkeit bewertet, der ebenfalls in der Tabelle angegeben ist. Das Ergebnis zeigt Fig. 7.

Bei dem angegebenen Beispiel ist die Grundfrequenz GF "middle", m=1, die relative Abweichung diff ist "middle", m=0,9, und der Amplitudenwert amp ist ebenfalls "middle", m=0,8. Es gelten die Regeln 18, 19, 20. Die Regel 19 hat den höchsten Plausibilitätsgrad: If diff = m and amp = m and GF = m, then GW = h, Plausibilitätsgrad 0,81. Der Operator für "and" ist ein Produktoperator. Es ergibt sich somit das Produkt 0,1·0,9 ·0,8 = 0,72. Dieses Produkt wird mit dem Plausibilitätsgrad 0,81 multipliziert und ergibt eine Glaubwürdigkeit GW = h mit einem Spitzenwert für die dreieckige Zugehörigkeitsfunktion von 0,583 wie in Fig. 7 dargestellt.

Wie der Tabelle der Regeln zu entnehmen ist, wird derselben Kombination der drei linguistischen Variablen eine Glaubwürdigkeit von "middle", GW = m, mit einem Plausibilitätsgrad von 0,2 zugeordnet, das zu einer dreieckigen Zugehörigkeitsfunktion mit einem Spitzenwert von 0,14 gemäß Fig. 7 führt. Genauso können aber diese Eingangsvariablen mit einer Glaubwürdigkeit von "very high", GW = vh und einem Plausibilitätsgrad von 0,5 bewertet werden, was zu einer Zugehörigkeitsfunktion vh mit einem Spitzenwert von 0,36 führt, wie in Fig. 7 angegeben.

Sämtliche 35 Regeln werden jeweils auf die in linguistische Variable umgewandelten drei Meßwerte angewendet. Für jede Stelle des Intervalls der Glaubwürdigkeitszahlenwerte von -1 bis +1 wird das Maximum über alle 35 resultierenden Kurven genommen. Das Ergebnis dieser Prozedur ist der in Fig. 8 dargestellte Funktionsverlauf. Zur Defuzzifikation wird der Schwerpunkt des Funktionsverlaufs bestimmt und der Glaubwürdigkeitszahlenwert 0,6 am Ausgang der Fuzzy-Regelbasis 30 ausgegeben.

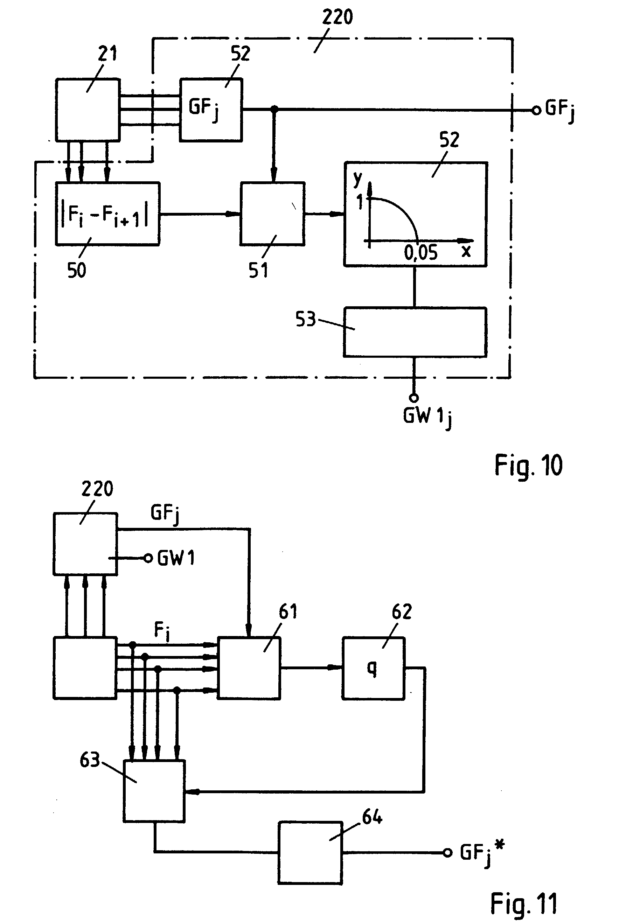

Fig. 9 zeigt einen zeitlichen Verlauf von Glaubwürdigkeitszahlenwerten für die Ermittlung der Grundfrequenz des in Fig. 2 gezeigten Frequenzspektrums. Man sieht deutlich, daß in dem Zeitbereich, in dem das Frequenzspektrum in Fig. 2 deutliche Frequenzlinien aufweist, da das Nutz/Störverhältnis des Empfangssignals gut ist, der Glaubwürdigkeitszahlenwert für die ermittelte Grundfrequenz GF hoch ist, während dort, wo keine ausgeprägten Frequenzlinien mehr zu erkennen sind, nämlich im Zeitbereich ab 150 s, der Glaubwürdigkeitszahlenwert für die ermittelte Grundfrequenz deutlich abnimmt.

Fig. 10 zeigt ein Blockschaltbild für eine spezielle Rechenschaltung 22 zum Ermitteln der Grundfrequenzen GFj, die der Auswahlschaltung 21 nachgeschaltet ist. In einer Differenzstufe 50 werden die Differenzfrequenzen $\Delta i$ = IFi-Fi+1I der Frequenzen benachbarter Frequenzlinien gebildet. Die niedrigste Frequenz wird ebenfalls als Differenz zur Frequenz 0 an den Ausgang der Differenzstufe 50 gegeben. In einer nachgeordneten Rechnerschaltung 51 wird eine relative Grundfrequenzabweichung zwischen den Differenzfrequenzen und einer Grundfrequenz GFj am Ausgang eines Teilers 52 gebildet.

$$\left| \frac{F_i - F_{i+1}}{GF_j} \right|$$

Dem Teiler 52 sind die Frequenzlinien mit den drei größten Amplitudenwerten zugeführt, aus denen die Grundfrequenzen GFj ermittelt werden. Die relative Grundfrequenzabweichung wird zur Fuzzifikation einer Bewertungsschaltung 52 zugeführt und mit einer Zugehörigkeitsfunktion bewertet, die im Bereich für relative Abweichungen größer als 0,05 gleich 0 ist und im Bereich von 0 bis 0,05 eine abfallende Funktion y von 1 auf 0 aufweist. Die Fuktion y lautet:

$$y_{ij} = \sqrt[5]{\cos 10\pi \cdot x},$$

wobei x die relative Grundfrequenzabweichung im Bereich von $0 \leq x \leq 0,05$ ist. Für jede Grundfrequenz GFj wird über alle Differenzfrequenzen $\Delta i$ der Zugehörigkeitsfunktionswert $y_{ij}$ ermittelt. In einer Glaubwürdigkeitsstufe 53 wird für jede Grundfrequenz GFj der Mittelwert der Zugehörigkeitsfunktionswerte $y_{ij}$ gebildet und auf den ermittelten Maximalwert der Zugehörigkeitsfunktionswerte $y_{ij}$ max bezogen. Die Glauwürdigkeitsstufe 53 gibt eine Grundfrequenz-Glaubwürdigkeit GW1j aus, mit der die Differenzfrequenz am Ausgang der Differenzstufe 50 die Grundfrequenz GFi ist.

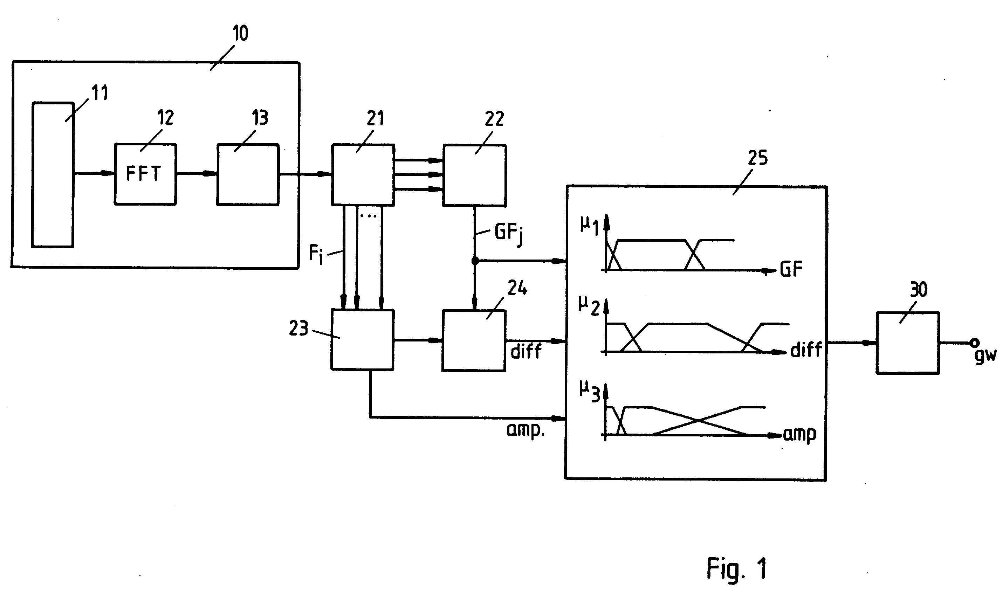

Die Grundfrequenz GFj mit der höchsten Grundfrequenz-Glaubwürdigkeit GW1j ist dann Eingangssignal der Rechenstufe 24 in Fig. 1.

Eine genauere Bestimmung der Grundfrequenz, die der Rechenschaltung 24 zugeführt wird, erlaubt die Schaltanordnung in Fig. 11. Der in Fig. 10 gezeigten modifizierten Rechenschaltung 220, die die Grundfrequenz GFj mit der höchsten Grundfrequenz-Glaubwürdigkeit GW1j liefert, ist eine Quotientenschaltung 61 nachgeordnet, die mit der Auswahlschaltung 21 zusammengeschaltet ist. In der Quotientenschaltung 61 werden die Frequenzen Fi der ausgewählten Frequenzlinien durch die Grundfrequenz GFj mit der höchsten Grundfrequenz-Glaubwürdigkeit GW1j geteilt und das Ergebnis in einer Integer-Schaltung 62 auf eine ganze Zahl q auf- oder abgerundet. Sämtliche Frequenzen Fi werden durch die ganze Zahl q in einer Quotientenstufe 63 geteilt, der eine Median-Auswahlstufe 64 nachgeschaltet ist. In der Median-Auswahlstufe 64 werden die durch die ganze Zahl q geteilten Frequenzen Fi der Größe nach sortiert und die mittlere Frequenz als Grundfrequenz GFj∗ für die Rechenstufe 24 ausgegeben.

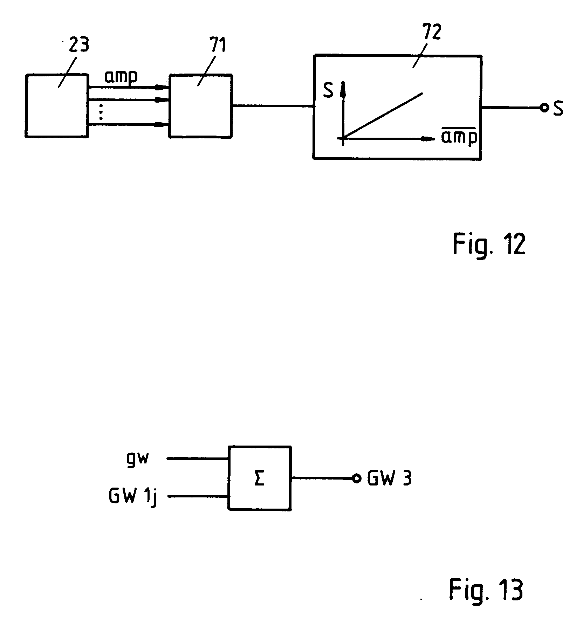

Fig. 12 zeigt ein Blockschaltbild für eine Auswerteeinheit, mit der ermittelt wird, ob das Frequenzspektrum signifikante Frequenzlinien aufweist. Dazu werden die Amplitudenwerte amp am Ausgang der Sortierschaltung 23 einem Mittelwertbildner 71 zugeführt. Der Mittelwert der Amplituden amp wird in einer Bewertungsstufe 72 mit einem Wert zwischen 0 und 1 bewertet, die ein Strukturmaß s dafür liefert, ob das Frequenzspektrum ausgeprägte Frequenzlinien aufweist. Da die Amplitudenwerte amp der Frequenzlinien auf den bei der gleichen Frequenz auftretenden Rauschpegel normiert wurden, ist der Mittelwert und damit das Strukturmaß s bei einem Frequenzspektrum mit ausgeprägten Frequenzlinien hoch.

In einer Summierschaltung gemäß Fig. 13 wird die Grundfrequenz-Glaubwürdigkeit GW1j am Ausgang der in Fig. 10 gezeigten speziellen Rechenschaltung 220 und die Glaubwürdigkeitszahlenwerte GW am Ausgang der Fuzzy-Regelbasis 30 in Fig. 1 summiert und ihr Mittelwert gebildet, der eine dritte Glaubwürdigkeit GW3 liefert. Die Glaubwürdigkeit GW3 macht eine Aussage über Vorkommen und Qualität harmonischer Frequenzlinien im Frequenzspektrum.

**Patentansprüche**

1. Verfahren zum Bestimmen einer oder mehrerer Grundfrequenzen und/oder ihrer Harmonischen im Frequenzspektrum eines Empfangssignals einer akustischen Ortungsanlage, bei dem mindestens drei Frequenzlinien mit den größten Amplitudenwerten ausgewählt und ihre Frequenzen bestimmt werden sowie Differenzen zwischen diesen Frequenzen gebildet werden und bei dem aus den Frequenzen und aus den gebildeten Differenzen eine oder mehrere Grundfrequenzen abgeleitet werden, dadurch gekennzeichnet, daß die Grundfrequenzen und/oder Frequenzabweichungen zwischen den gebildeten Differenzen und den Grundfrequenzen sowie die Amplitudenwerte jeweils in aus der Erfahrung eines Auswerters abgeleitete Größenordnungsbereiche eingeteilt werden und linguistische Variable bilden, daß die linguistischen Variablen mit Zugehörigkeitsfunktionen in den jeweiligen Größenordnungsbereichen bewertet werden und Eingangsvariable für eine Fuzzy-Regelbasis bilden, daß durch unscharfes Schließen über aus Expertenwissen umsetzende Regeln eine Glaubwürdigkeit ermittelt wird, mit der die Grundfrequenz oder eine mit der Grundfrequenz harmonische Frequenz bestimmt wird.

2. Verfahren nach Anspruch 1, dadurch gekennzeichnet, daß Abweichungen der Frequenzen der Frequenzlinien von Harmonischen der Grundfrequenz nach einer Einteilung in Größenordnungsbereiche und Bewertung mit Zugehörigkeitsfunktionen Eingangsvariable der Fuzzy-Regelbasis bilden.

3. Verfahren nach Anspruch 1 oder 2, dadurch gekennzeichnet, daß die Grundfrequenzen in drei Größenordnungsbereiche "niedrig", "mittel" und "hoch" aufgeteilt werden, daß die Zugehörigkeit der Grundfrequenz abhängig von ihrer Größe innerhalb ihres Größenordnungsbereichs mit einem Wert zwischen "0" und "1" festgestellt wird, daß die Zugehörigkeitsfunktion zwischen den Werten "0" und "1" einen dreieckförmigen oder trapezförmigen Verlauf in Abhängigkeit von der Größe der Grundfrequenz im Größenordnungsbereich aufweist und daß Größenordnungsbereiche und Zugehörigkeitsfunktionen sich überlappen.

4. Verfahren nach Anspruch 1, dadurch gekennzeichnet, daß zum Bilden der linguistischen Variablen die Amplitudenwerte auf einen bei der gleichen Frequenz auftretenden Rauschpegel normiert werden und in drei Größenordnungsbereiche "niedrig", "mittel" und "hoch" aufgeteilt werden, daß die Zugehörigkeit des Amplitudenwerts innerhalb seines Größenordnungsbereichs abhängig von seiner Größe mit einem Wert zwischen "0" und "1" festgestellt wird, daß die Zugehörigkeitsfunktion zwischen den Werten "0" und "1" einen trapezförmigen Verlauf in Abhängigkeit vom Amplitudenwert im Größenordnungsbereich aufweist und daß Größenordnungsbereiche und Zugehörigkeitsfunktionen sich überlappen.

5. Verfahren nach Anspruch 1, dadurch gekennzeichnet, daß die Frequenzen und die gebildeten Differenzen durch auswählbare ganze Teilerzahlen geteilt werden und eine erste Anzahl von Grundfrequenzen bilden.

6. Verfahren nach einem der Ansprüche 1 bis 5, dadurch gekennzeichnet, daß Frequenzlinien mit vorgebbarer Größe ihrer Amplitudenwerte ausgewählt werden, daß die Frequenz jeder Frequenzlinie durch jede Grundfrequenz geteilt wird und der Quotient auf eine ganze Zahl aufgerundet wird, daß jede Frequenz durch die so gewonnene ganze Zahl geteilt wird und eine zweite Anzahl von Grundfrequenzen liefert.

7. Verfahren nach Anspruch 6, dadurch gekennzeichnet, daß der Median der zweiten Anzahl eine verbesserte Grundfrequenz liefert.

8. Verfahren nach einem Ansprüche 1 bis 7, dadurch gekennzeichnet, daß eine relative Abweichung der Frequenz der Frequenzlinie von einer harmonischen Frequenz, die aus der mit der ganzen Zahl multiplizierten Grundfrequenz gebildet wird, geteilt durch dieselbe Grundfrequenz bestimmt wird, daß die so gewonnene relative Abweichung zum Bilden der linguistischen Variablen in drei Größenordnungsbereiche eingeteilt wird mit Zugehörigkeitsfunktionen bewertet wird, daß benachbarte Größenordnungsbereiche und Zugehörigkeitsfunktionen sich überlappen und daß die Zugehörigkeitsfunktionen einen trapezförmigen Verlauf in Abhängigkeit von der relativen Abweichung im Größenordnungsbereich aufweisen.

9. Verfahren nach Anspruch 8, dadurch gekennzeichnet, daß die relative Abweichung im Größenordnungsbereich von 0 bis 0,05 "niedrig", im Größenordnungsbereich von 0,05 bis 0,25 "mittel" und im Größenordnungsbereich größer 0,25 "hoch" ist.

10. Verfahren nach einem der Ansprüche 1 bis 9, dadurch gekennzeichnet, daß in der Fuzzy-Regelbasis Regeln für eine multiplikative Verknüpfung der Eingangsvariablen vorgesehen sind, daß jede Regel eine linguistische Variable für die Glaubwürdigkeit angibt und jedes Produkt der Zugehörigkeitsfunktionswerte der Eingangsvariablen einen Grad für die Glaubwürdigkeit liefert.

11. Verfahren nach einem der Ansprüche 1 bis 10, dadurch gekennzeichnet, daß eine vorgebbare Anzahl von Frequenzlinien mit den größten Amplitudenwerten aus dem Frequenzspektrum ausgewählt wird, daß jeweils Differenzfrequenzen aus den Frequenzen benachbarter Frequenzlinien der vorgebbaren Anzahl und zwischen der kleinsten Frequenz zu der Frequenz "0" gebildet werden, daß eine relative Grundfrequenzabweichung aus den Differenzfrequenzen und jeder Grundfrequenz bezogen auf die Grundfrequenz bestimmt wird, daß die relative Grundfrequenzabweichung als liguistische Variable mit einer Zugehörigkeitsfunktion bewertet wird.

12. Verfahren nach Anspruch 11, dadurch gekennzeichnet, daß die Zugehörigkeitsfunktion für relative Grundfrequenzabweichungen von 0 bis 0,03 nahezu den Wert 1, für relative Grundfrequenzabweichungen von 0,03 bis 0,05 einen abfallenden Verlauf und für relative Grundfrequenzabweichungen größer 0,05 den Wert 0 aufweist.

13. Verfahren nach Anspruch 12, dadurch gekennzeichnet, daß die Zugehörigkeitsfunktion für die relative Grundfrequenzabweichung x im Bereich $0 \leqslant x \leqslant 0,05$ gleich der Funktion

$$y = \sqrt[5]{\cos(10\pi x)}$$

oder gleich einem diese Funktion approximierenden Polygonzug gewählt wird.

14. Verfahren nach Anspruch 12 oder 13, dadurch gekennzeichnet, daß für jede Grundfrequenz der Mittelwert der Zugehörigkeitsfunktionswerte für die relative Grundfrequenzabweichung ermittelt wird und auf den Maximalwert dieser Zugehörigkeitsfunktionswerte bezogen wird und eine Grundfrequenzglaubwürdigkeit liefert, deren Wert zwischen 1 und 0 liegt.

15. Verfahren nach einem der Ansprüche 6 bis 14, dadurch gekennzeichnet, daß die Grundfrequenz mit der größten Grundfrequenzglaubwürdigkeit zum Ermitteln der zweiten Anzahl von Grundfrequenzen verwendet wird.

16. Verfahren nach einem der Ansprüche 1 bis 15, dadurch gekennzeichnet, daß jeder Regel in der Fuzzy-Regelbasis ein Plausibilitätsgrad zugeordnet wird und die ermittelte Glaubwürdigkeit mit dem Plausibilitätsgrad bewertet wird.

17. Verfahren nach einem der Ansprüche 1 bis 16, dadurch gekennzeichnet, daß den in der Fuzzy-Regelbasis ermittelten linguistischen Variablen für die Glaubwürdigkeiten, die in mehrere Glaubwürdigkeitsbereiche mit jeweils dreiecksförmigem Verlauf der Zugehörigkeitsfunktion aufgeteilt ist, zur Defuzzifikation ein vorgebbares Intervall für Glaubwürdigkeitszahlenwerte zugeordnet wird, daß für alle Regeln die Werte der Zugehörigkeitsfunktionen für die Glaubwürdigkeitsbereiche berechnet wird, daß an jeder Stelle des Intervalls das Maximum der Werte ausgewählt wird und die Maxima einen Funktionsverlauf bilden, daß ein Flächenschwerpunkt des Funktionsverlaufs bestimmt wird, daß der Flächenschwerpunkt einen resultierenden Glaubwürdigkeitszahlenwert für die Grundfrequenz und/oder das Auftreten harmonischer Frequenzen im Frequenzspektrum angibt.

18. Verfahren nach einem der Ansprüche 1 bis 17, dadurch gekennzeichnet, daß ein Mittelwert der auf einen bei der gleichen Frequenz auftretenden Rauschpegel normierten Amplitudenwerte sämtlicher Frequenzlinien der vorgegebenen Anzahl gebildet wird, daß den Mittelwerten eine Zugehörigkeitsfunktion zugeordnet wird, deren Wert von 0 auf 1 linear ansteigt und ein Strukturmaß für das Auftreten signifikanter Frequenzlinien im Frequenzspektrum ist.

19. Verfahren nach Anspruch 13 bis 18, dadurch gekennzeichnet, daß das Minimum der ermittelten Werte für die Grundfrequenzglaubwürdigkeit, für den Glaubwürdigkeitszahlenwert und für das Strukturmaß eine Aussagesicherheit über die durchgeführte Untersuchung des Frequenzspektrums liefert.

20. Verwendung des Verfahrens nach einem der Ansprüche 1 bis 19 zur Detektion und Klassifizierung von Luft- und/oder Wasserfahrzeugen mit Propellerantrieb, wobei Empfangssignale in einem tieffrequenten Bereich, in dem die möglichen Grundfrequenzen liegen (LOFAR-Analyse), empfangen und ausgewertet werden.

21. Verwendung des Verfahrens nach einem der Ansprüche 1 bis 19 zur Detektion und Klassifizierung von Luft- und/oder Wasserfahrzeugen mit Propellerantrieb, wobei Empfangssignale in einem höherfrequenten Bereich als die Grundfrequenzen und/oder ihre ausgeprägten Harmonischen empfangen werden, über einen Bandpaß bandbegrenzt und anschließend demoduliert werden (DEMON-Analyse) und das Frequenzspektrum des demodulierten Signals ausgewertet wird.

22. Verfahren nach Anspruch 20 oder 21, dadurch gekennzeichnet, daß zur Klassifizierung von Hubschraubern eine Unterscheidung der harmonischen Frequenzlinien aufgrund des Hauptrotors und des Heckrotors durch Bereiche und Zugehörigkeitsfunktionen der linguistischen Variablen für die beiden Grundfrequenzen erfolgt.

23. Verfahren nach den Ansprüchen 20, 21 und 22, dadurch gekennzeichnet, daß die Auswahl der Teilerzahlen entsprechend möglichen Blattzahlen des Propellers erfolgt.

24. Verwendung des Verfahrens nach einem der Ansprüche 1 bis 19 zur Detektion und Klassifizierung von Landfahrzeugen, wobei die Auswahl der Teilerzahlen entsprechend möglichen Zylinder- und Ventilzahlen erfolgt.

25. Verfahren nach Anspruch 24, dadurch gekennzeichnet, daß eine Unterscheidung von einer harmonischen Schar aufgrund einer Zündfolgefrequenz und einer zweiten harmonischen Schar aufgrund einer Kettengliedfrequenz über unterschiedliche linguistische Variable für die normierten Amplitudenwerte erfolgt.

## Claims

1. Method for determining one or more fundamental frequencies and/or their harmonics in the frequency spectrum of a received signal of an acoustic locating system, in which at least three frequency lines with the highest amplitude values are selected and their frequencies determined, and differences between these frequencies are formed, and in which one or more fundamental frequencies are derived from the frequencies and from the differences formed, characterised in that the fundamental frequencies and/or frequency deviations between the differences formed and the fundamental frequencies as well as the amplitude values are respectively divided into ranges of magnitude derived from the empirical information of an evaluator and form linguistic variables, that the linguistic variables are evaluated with association functions in the respective ranges of magnitude and form input variables for a fuzzy control base, that through indefinite inference via rules converting from expert knowledge a credibility is determined with which the fundamental frequency or a frequency harmonic with the fundamental frequency is determined.

2. Method according to Claim 1, characterised in that deviations of the frequencies of the frequency lines from harmonics of the fundamental frequency after division into magnitude ranges and evaluation with association functions form input variables of the fuzzy control base.

3. Method according to Claim 1 or 2, characterised in that the fundamental frequencies are divided into three magnitude ranges "low", "medium" and "high", that the association of the fundamental frequency is established dependent upon its magnitude within its magnitude range with a value between "0" and "1", that the association function between the values "0" and "1" has a triangular or trapezoidal curve in dependence upon the magnitude of the fundamental frequency in the magnitude range, and that the magnitude ranges and association functions overlap.

4. Method according to Claim 1, characterised in that to form the linguistic variables, the amplitude values are normalised to a noise level occurring at the same frequency and are divided into three magnitude ranges "low", "medium" and "high", that the association of the amplitude value within its magnitude range is established dependent upon its magnitude with a value between "0" and "1", that the association function between the values "0" and "1" has a trapezoidal curve in dependence upon the amplitude value in the magnitude range, and that the magnitude ranges and association functions overlap.

5. Method according to Claim 1, characterised in that the frequencies and the differences formed are divided by selectable whole divisor numbers and form a first number of fundamental frequencies.

6. Method according to one of Claims 1 to 5, characterised in that frequency lines are selected with a predeterminable magnitude of their amplitude values, that the frequency of each frequency line is rounded off to a whole number, that each frequency is divided by the whole number thus obtained and provides a second number of fundamental frequencies.

7. Method according to Claim 6, characterised in that the median of the second number provides an improved fundamental frequency.

8. Method according to one of Claims 1 to 7, characterised in that a relative deviation of the frequency of the frequency line from a harmonic frequency, which is formed from the fundamental frequency multiplied by the whole number, divided by the same fundamental frequency is determined, that for formation of the linguistic variables, the relative deviation thus obtained is divided into three magnitude ranges and evaluated with association functions, that adjacent magnitude ranges and association functions overlap, and that the association functions have a trapezoidal curve in dependence upon the relative deviation in the magnitude range.

9. Method according to Claim 8, characterised in that the relative deviation is "low" in the magnitude range from 0 to 0.05, "medium" in the magnitude range from 0.05 to 0.25 and "high" in the magnitude range above 0.25.

10. Method according to one of Claims 1 to 9, characterised in that in the fuzzy control base rules are provided for a multiplicative linkage of the input variables, that each rule specifies a linguistic variable for the credibility and each product of the association function values of the input variables provides one degree for the credibility.

11. Method according to one of Claims 1 to 10, characterised in that a predeterminable number of frequency lines with the highest amplitude values is selected from the frequency spectrum, that difference frequencies are respectively formed from the frequencies of adjacent frequency lines of the predeterminable number and between the lowest frequency to frequency "0", that a relative deviation in fundamental frequency is determined in relation to the fundamental frequency from the difference frequencies and each fundamental frequency, that the relative deviation in fundamental frequency is evaluated as a linguistic variable with an association function.

12. Method according to Claim 11, characterised in that the association function has approximately the value 1 for relative deviations in fundamental frequency from 0 to 0.3, has a descending curve for relative deviations in fundamental frequency from 0.03 to 0.05 and has the value 0 for relative deviations in fundamental frequency above 0.05.

13. Method according to Claim 12, characterised in that the association function for relative deviation in fundamental frequency x is selected in the range $0 \leq x \leq 0.05$ equal to the function

$$y = \sqrt[5]{\cos(10\pi x)}$$

or equal to a progression approximating this function.

14. Method according to Claim 12 or 13, characterised in that the mean of the association function values for the relative deviation in fundamental frequency is determined for each fundamental frequency and is calculated on the basis of the maximum value of these association function values and provides a fundamental frequency credibility, the value of which lies between 1 and 0.

15. Method according to one of Claims 6 to 14, characterised in that the fundamental frequency with the highest fundamental frequency credibility is used to determine the second number of fundamental frequencies.

16. Method according to one of Claims 1 to 15, characterised in that a degree of plausibility is allocated to each rule in the fuzzy control base and the determined credibility is evaluated with the degree of plausibility.

17. Method according to one of Claims 1 to 16, characterised in that a predeterminable interval for credibility numerical values is allocated to the linguistic variables determined in the fuzzy control base for the credibilities, which are divided into several credibility ranges with a respective triangular curve of the association function for defuzzification, that the values of the association functions for the credibility ranges are calculated for all rules, that the maximum of the values is selected at each location of the interval and the maxima form a function curve, that a centroid of the function curve is determined, that the centroid specifies a resulting credibility numerical value for the fundamental frequency and/or the occurrence of harmonic frequencies in the frequency spectrum.

**18.** Method according to one of Claims 1 to 17, characterised in that a mean of the amplitude values of all the frequency lines of the predetermined number which are normalised to a noise level occurring at the same frequency is formed, that an association function is allocated to the means, the value of said association function increasing linearly from 0 to 1 and being a structural dimension for the occurrence of significant frequency lines in the frequency spectrum.

**19.** Method according to Claim 13 to 18, characterised in that the minimum of the determined values for the fundamental frequency credibility, for the credibility numerical value and for the structural dimension provides a confidence level concerning the conducted examination of the frequency spectrum.

**20.** Use of the method according to one of Claims 1 to 19 for the detection and classification of aircraft and/or watercraft with propeller drive, whereby received signals are received in a low-frequency range, in which the possible fundamental frequencies lie (LOFAR Analysis), and are evaluated.

**21.** Use of the method according to one of Claims 1 to 19 for the detection and classification of aircraft and/or watercraft with propeller drive, whereby received signals are received in a higher frequency range than the fundamental frequencies and/or their pronounced harmonics, are limited in band via a bandpass filter and are subsequently demodulated (DEMON Analysis), and the frequency spectrum of the demodulated signal is evaluated.

**22.** Method according to Claim 20 or 21, characterised in that for the classification of helicopters, differentiation of the harmonic frequency lines is carried out on the basis of the main rotor and the tail rotor through ranges and association functions of the linguistic variables for the two fundamental frequencies.

**23.** Method according to Claims 20, 21 and 22, characterised in that the selection of divisor numbers is carried out in accordance with possible blade numbers of the propeller.

**24.** Use of the method according to one of Claims 1 to 19 for the detection and classification of land vehicles, whereby the selection of divisor numbers is carried out in accordance with possible cylinder and valve numbers.

**25.** Method according to Claim 24, characterised in that differentiation of one harmonic set is carried out on the basis of an ignition order frequency and of a second harmonic set is carried out on the basis of a chain link frequency via different linguistic variables for the normalised amplitude values.

**Revendications**

**1.** Procédé pour déterminer une ou plusieurs fréquences fondamentales et/ou leurs harmoniques dans le spectre des fréquences d'un signal de réception d'une installation de localisation acoustique, selon lequel au moins trois raies de fréquences possédant des valeurs d'amplitude maximales sont sélectionnées et leurs fréquences sont déterminées et des différences entre ces fréquences sont formées, et selon lequel, une ou plusieurs fréquences fondamentales sont dérivées des fréquences et des différences formées, caractérisé en ce que les fréquences fondamentales et/ou les écarts de fréquence entre les différences formées et les fréquences fondamentales, ainsi que les valeurs d'amplitude sont répartis respectivement dans des gammes d'ordres de grandeur dérivées de l'expérience d'une personne effectuant l'évaluation, et forment des variables linguistiques, que les variables linguistiques sont pondérées avec des fonctions d'appartenance dans les gammes respectives d'ordres de grandeur et forment des variables d'entrée pour une base de règles en logique floue, et qu'une vraisemblance, avec laquelle est déterminée la fréquence fondamentale ou une fréquence harmonique de la fréquence fondamentale, est établie au moyen d'une conclusion floue au moyen de règles réalisant une conversion à partir de connaissances d'expert.

**2.** Procédé selon la revendication 1, caractérisé en ce que des écarts des fréquences des raies de fréquences vis-à-vis d'harmoniques de la fréquence fondamentale après un classement en des gammes d'ordres de grandeur et une pondération avec des fonctions d'appartenance forment des variables d'entrée de la base de règles à logique floue.

**3.** Procédé selon la revendication 1 ou 2, caractérisé en ce que les fréquences de base sont classées dans trois gammes d'ordres de grandeur "faible", "moyen" et "élevé", que l'appartenance de la fréquence fondamentale est réglée sur une valeur comprise entre "0" et "1" en fonction de sa grandeur à l'intérieur de sa gamme d'ordres de grandeur, que la fonction d'appartenance possède entre les valeurs "0" et "1" une allure de forme triangulaire ou

**EP 0 654 676 B1**

trapézoïdale en fonction de la valeur de la fréquence fondamentale dans la gamme d'ordres de grandeur, et que les gammes d'ordres de grandeur et les fonctions d'appartenance se chevauchent.

4. Procédé selon la revendication 1, caractérisé en ce que pour la formation des variables linguistiques, les valeurs d'amplitude sont normalisées sur un niveau de bruit apparu pour la même fréquence et sont classées en trois gammes d'ordres de grandeur "faible", "moyen" et "élevé", que l'appartenance de la valeur d'amplitude est réglée à l'intérieur de sa gamme d'ordres de grandeur, en fonction de sa grandeur, sur une valeur comprise entre "0" et "1", que la fonction d'appartenance entre les valeurs "0" et "1" possède une forme trapézoïdale en fonction de la valeur d'amplitude dans la gamme d'ordres de grandeur et que les gammes d'ordres de grandeur et les fonctions d'appartenance se chevauchent.

5. Procédé selon la revendication 1, caractérisé en ce que les fréquences et les différences formées sont classées au moyen de nombres diviseurs entiers pouvant être choisis et forment un premier nombre de fréquences fondamentales.

6. Procédé selon l'une des revendications 2 à 5, caractérisé en ce que des raies des fréquences avec des valeurs d'amplitude de grandeur pouvant être prédéterminée sont sélectionnées, que la fréquence de chaque raie de fréquence est divisée par chaque fréquence fondamentale et que le quotient est arrondi à un nombre entier, que chaque fréquence est divisée par le nombre entier ainsi obtenu et forme ainsi un second nombre de fréquences fondamentales.

7. Procédé selon la revendication 6, caractérisé en ce que la médiane du second nombre fournit une fréquence fondamentale améliorée.

8. Procédé selon l'une des revendications 1 à 7, caractérisé en ce qu'un écart relatif de la fréquence de la raie de fréquence par rapport à une fréquence harmonique, qui est formée à partir de la fréquence fondamentale multipliée par le nombre entier, divisé par cette même fréquence fondamentale est déterminé, que l'écart relatif ainsi obtenu est classé, pour la formation des variables linguistiques, dans trois gammes d'ordres de grandeur et est pondéré par des fonctions d'appartenance, que des gammes voisines d'ordres de grandeur et des fonctions d'appartenance se chevauchent et que les fonctions d'appartenance possèdent une forme trapézoïdale en fonction de l'écart relatif dans la gamme d'ordres de grandeur.

9. Procédé selon la revendication 8, caractérisé en ce que l'écart relatif dans la gamme d'ordres de grandeur de 0 à 0,05 est "faible", que l'écart relatif dans la gamme d'ordres de grandeur de 0,05 à 0,25 est "moyen" et que l'écart relatif dans la gamme d'ordres de grandeur supérieur à 0,25 est "élevé".

10. Procédé selon l'une des revendications 1 à 9, caractérisé en ce que des règles pour une combinaison multiplicative des variables d'entrée sont prévues dans la base des règles de logique floue, que chaque règle indique une variable linguistique pour la vraisemblance et que chaque produit des valeurs de fonctions d'appartenance des variables d'entrée fournit un degré de vraisemblance.

11. Procédé selon l'une des revendications 1 à 10, caractérisé en ce qu'un nombre pouvant être prédéterminé de raies de fréquences possédant des valeurs d'amplitudes maximales est sélectionné à partir du spectre de fréquences, que respectivement des fréquences de différences sont formées à partir des fréquences de raies de fréquences voisines du nombre pouvant être prédéterminé et entre la fréquence la plus faible et la fréquence "0" sont formées, qu'un écart relatif de fréquence fondamentale est déterminé à partir des fréquences de différences et de chaque fréquence fondamentale, d'une manière rapportée à la fréquence fondamentale, et que l'écart relatif de fréquence fondamentale est évalué en tant que variable linguistique avec une fonction d'appartenance.

12. Procédé selon la revendication 11, caractérisé en ce que la fonction d'appartenance pour des écarts relatifs de fréquence fondamentale de 0 à 0,03 possède presque la valeur 1, que la fonction d'appartenance pour des écarts relatifs par rapport à la fréquence fondamentale compris entre 0,03 et 0,05 possède une allure retombante et que la fonction d'appartenance pour les écarts relatifs par rapport à la fréquence fondamentale supérieurs à 0,05 possède la valeur 0.

13. Procédé selon la revendication 12, caractérisé en ce que la fonction d'appartenance pour l'écart relatif de fréquence fondamentale x dans la gamme "0" $\leq x \leq 0,05$ est choisi égale à la fonction

$$y = {}^{5}\sqrt{\cos(10\pi x)}$$

ou au moyen d'un tracé polygonal approximant cette fonction.

14. Procédé selon la revendication 12 ou 13, caractérisé en ce que pour chaque fréquence fondamentale la moyenne des valeurs de la fonction d'appartenance est déterminée pour l'écart relatif de fréquence fondamentale et est rapportée à la valeur maximale de ces valeurs de la fonction d'appartenance et fournit une vraisemblance pour la fréquence fondamentale, dont la valeur est comprise entre 1 et 0.

15. Procédé selon l'une des revendications 6 à 14, caractérisé en ce que la fréquence fondamentale ayant la vraisemblance maximale est utilisée pour déterminer le second nombre de fréquences fondamentales.

16. Procédé selon l'une des revendications 1 à 15, caractérisé en ce qu'un degré de vraisemblance est affecté à chaque règle dans la base des règles de logique floue et que la vraisemblance déterminée est pondérée avec le degré de vraisemblance.

17. Procédé selon l'une revendications 1 à 16, caractérisé en ce que pour supprimer le caractère flou, un intervalle pouvant être prédéterminé pour les valeurs chiffrées de vraisemblance est associé aux variables linguistiques, qui sont déterminées dans la base des règles de logique floue pour les vraisemblances, qui sont classées en plusieurs gammes de vraisemblances possédant une fonction d'appartenance de forme respectivement triangulaire, que pour toutes les règles les valeurs des fonctions de vraisemblance sont calculées pour les gammes de vraisemblances, que le maximum des valeurs est sélectionné au niveau de chaque emplacement de l'intervalle et que les maxima forment une allure de fonction, que le barycentre de la surface de la forme de la fonction est déterminé, et que le barycentre de la surface indique une valeur chiffrée résultante de vraisemblance pour la fréquence fondamentale et/ou l'apparition de fréquences harmoniques dans le spectre de fréquences.

18. Procédé selon l'une revendications 1 à 17, caractérisé en ce qu'on forme une valeur moyenne des valeurs d'amplitude, qui sont normalisées à un niveau de bruit apparaissant pour la même fréquence, de toutes les raies de fréquences du nombre prédéterminé, qu'aux valeurs moyennes est affectée une fonction d'appartenance, dont la valeur augmente linéairement de 0 à 1 et est un degré de structure pour l'apparition de raies de fréquences significatives dans le spectre des fréquences.

19. Procédé selon les revendications 13 à 18, caractérisé en ce que le minimum des valeurs déterminées pour la vraisemblance de la fréquence fondamentale, pour la valeur chiffrée de la vraisemblance et pour le degré de structure fournit une sécurité d'indication concernant l'examen effectué du spectre des fréquences.

20. Utilisation du procédé selon l'une des revendications 1 à 19 pour la détection et la classification de véhicules aériens et/ou marins comportant un système d'entraînement à hélice, les signaux de réception étant reçus et évalués dans une gamme de basses fréquences, dans laquelle sont situées les fréquences fondamentales possibles (analyse LOFAR).

21. Utilisation du procédé selon l'une des revendications 1 à 19, pour détecter et classer des véhicules aériens et/ou marins comportant un dispositif d'entraînement à hélice, dans lequel les signaux de réception sont reçus dans une gamme de fréquences plus élevées que les fréquences fondamentales et/ou leurs harmoniques marquées, la largeur de bande étant limitée dans un filtre passe-bande et ensuite les signaux sont démodulés (analyse DEMON) et le spectre des fréquences du signal démodulé est exploité.

22. Procédé selon la revendication 20 ou 21, caractérisé en ce que pour le classement d'hélicoptères, une différenciation des raies de fréquences harmoniques est effectuée sur la base du rotor principal et du rotor arrière au moyen de gammes et de fonctions d'appartenance des variables linguistiques pour les deux fréquences fondamentales.

23. Procédé selon les revendications 20, 21 et 22, caractérisé en ce que la sélection des nombres diviseurs s'effectue conformément aux nombres possibles de pales de l'hélice.

24. Utilisation du procédé selon l'une des revendications 1 à 19 pour détecter et classer des véhicules terrestres, selon lequel la sélection des nombres diviseurs s'effectue en fonction de nombres possibles de cylindres et de soupapes.

25. Procédé selon la revendication 24, caractérisé en ce qu'une différence entre un ensemble harmoniques sur la base d'une fréquence de séquences d'allumage, et un second ensemble harmonique sur la base d'une fréquence d'éléments de chaîne est établie par l'intermédiaire de variables linguistiques différentes pour des valeurs d'amplitude normalisées.

Fig. 1

EP 0 654 676 B1

Fig. 2

Fig. 9

Fig. 3

Fig. 4

Fig. 5

Fig. 6

Fig. 7

Fig. 8

Fig. 10

Fig. 11

Fig. 12

Fig. 13